# EUROPEAN PATENT APPLICATION

(11) **EP 4 813 692 A1**
(43) Date of publication of application: **30.09.2026**
(21) Application number: 26157420.6
(22) Date of filing: 10.02.2026
(51) Int. Cl.: B60K 1/04

(54) **VEHICLE REAR PORTION STRUCTURE**

(30) Priority: 26.03.2025 JP 2025052167
(71) Applicant: Toyota Jidosha Kabushiki Kaisha, Toyota-shi, Aichi-ken 471-8571 (JP)
(72) Inventor: MARUHASHI, Motokuni, Toyota-shi, Aichi-ken, 471-8571 (JP); FUJIWARA, Nobuyoshi, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A vehicle rear portion structure including: a panel member that is connected to a pair of rockers respectively extending in a vehicle longitudinal direction at further toward vehicle transverse direction outer sides than a battery case, and that covers a vehicle lower side of the battery case; and a breathable membrane that is provided at a vehicle longitudinal direction rear end portion side of a lower case that configures a lower portion of the battery case, that is disposed further toward a vehicle upper side than the panel member, that is configured to communicate an interior of the battery case and a vehicle exterior, and that adjusts pressure of the interior of the battery case. An extending portion, which juts-out toward a vehicle rear side from a rear end of the panel member and extends out toward a direction of overlapping with the breathable membrane, is provided.

## Description

### BACKGROUND

### Technical Field

The present disclosure relates to a vehicle rear portion structure.

### Related Art

Japanese Patent Application Laid-Open (JP-A) No. 2024-171053 discloses a technique relating to a vehicle in which a power storage device is installed. In this related art, a breathable membrane is provided at an upper case structuring the upper portion of a battery case that accommodates battery modules, and the pressures of the battery module interiors can be adjusted.

Because a breathable membrane is provided at the upper case in this way in the above-described related art, damage to the breathable membrane due to flying stones or the like at the time when the vehicle travels can be prevented. On the other hand, a gap must be provided at the upper side of the upper case (hereinafter called "upper cover"), and there is the possibility that the space within the passenger compartment, which is provided at the upper side of the battery case, will be reduced by that much.

### SUMMARY

The present disclosure provides a vehicle rear portion structure that can suppress damage to a breathable membrane while ensuring space of a passenger compartment interior.

A vehicle rear portion structure relating to a first aspect has: a panel member that extends in a vehicle longitudinal direction and a vehicle transverse direction, that is connected to a pair of rockers respectively extending in the vehicle longitudinal direction at further toward vehicle transverse direction outer sides than a battery case, and that covers a vehicle lower side of the battery case; and a breathable membrane that is provided at a vehicle longitudinal direction rear end portion side of a lower case that configures a lower portion of the battery case, and that is disposed further toward a vehicle upper side than the panel member, that is configured to communicate an interior of the battery case and a vehicle exterior, and that adjusts pressure of the interior of the battery case, wherein an extending portion, which juts-out toward a vehicle rear side from a rear end of the panel member and extends out toward a direction of overlapping with the breathable membrane as seen in a plan view of a vehicle, is provided.

The vehicle rear portion structure relating to the first aspect has the panel member and the breathable membrane. The panel member extends in the vehicle longitudinal direction and the vehicle transverse direction, and is connected to a pair of rockers that respectively extend in the vehicle longitudinal direction at further toward the vehicle transverse direction both outer sides than a battery case, and covers the vehicle lower side of the battery case. Due to the battery case being covered from the vehicle lower side by the panel member in this way, the battery case is protected from foreign matter from the road and the like due to traveling of the vehicle.

On the other hand, the breathable membrane, which is provided so as to be able to communicate the interior of the battery case and the vehicle exterior and which can adjust pressure of the interior of the battery case, is provided at the vehicle longitudinal direction rear end portion side of the lower case that configures the lower portion of the battery case. Therefore, in the present aspect, the space within the passenger compartment is ensured as compared with a case in which the breathable membrane is provided at the upper cover.

Further, the breathable membrane is disposed further toward the vehicle upper side than the panel member. Here, in the present aspect, the extending portion juts-out toward the vehicle rear side from the rear end of the panel member, and this extending portion extends out toward a direction of overlapping with the breathable membrane as seen in a plan view of the vehicle. As described above, because the breathable membrane is provided at the lower case, the breathable membrane is in a state of being exposed at the vehicle outer side. Therefore, due to the extending portion jutting-out toward the vehicle rear side from the rear end of the panel member, and this extending portion extending out toward a direction of overlapping with the breathable membrane as seen in a plan view of the vehicle, damage to the breathable membrane due to flying stones and the like can be suppressed.

Here, the expression "an extending portion, which ... extends out toward a direction of overlapping with the breathable membrane as seen in a plan view of a vehicle" illustrates the relationship between the extending direction of the extending portion and the breathable membrane, and it is not absolutely necessary for the extending portion and the breathable membrane to overlap as seen in a plan view of the vehicle.

In a vehicle rear portion structure relating to a second aspect, in the vehicle rear portion structure relating to the first aspect, plural breathable membranes are provided.

In the vehicle rear portion structure relating to the second aspect, due to plural breathable membranes being provided, even if one of the breathable membranes is damaged, adjustment of the pressure of the interior of the battery case is possible owing to another breathable membrane.

In a vehicle rear portion structure relating to a third aspect, in the vehicle rear portion structure relating to the first aspect or the second aspect, the breathable membrane is formed of a material that has both a waterproof property and gas permeability.

In the vehicle rear portion structure relating to the third aspect, due to the breathable membrane being formed of a material that has both a waterproof property and gas permeability, moisture entering into the battery case can be suppressed even though the breathable membrane is exposed at the vehicle exterior.

In a vehicle rear portion structure relating to a fourth aspect, in the vehicle rear portion structure relating to any one of the first aspect through the third aspect, a smoke exhausting valve, which is configured to exhaust smoke that is within the battery case, is disposed at a vehicle rear side of the battery case, and the breathable membrane is provided further toward a vehicle transverse direction outer side and a vehicle vertical direction upper side than the smoke exhausting valve.

In the vehicle rear portion structure relating to the fourth aspect, the smoke exhausting valve, which can exhaust smoke generated within the battery case, is disposed at the vehicle rear side of the battery case. Due to the breathable membrane being provided further toward a vehicle transverse direction outer side and the vehicle vertical direction upper side than the smoke exhausting valve, it is possible to suppress gas, which is exhausted from the smoke exhausting valve, flowing in towards the breathable membrane.

In a vehicle rear portion structure relating to a fifth aspect, the vehicle rear portion structure relating to any one of the first aspect through the fourth aspect further has a connector block provided at a flange portion that is provided at the vehicle longitudinal direction rear end portion side of the lower case, wherein the breathable membrane is mounted to the connector block.

In the vehicle rear portion structure relating to the fifth aspect, the breathable membrane is held at the connector block. Namely, the breathable membrane can be mounted to the vehicle by using the connector block. In a case in which external force is applied to the vehicle, some of the energy of that external force is absorbed by the connector block, and therefore, damage to the breathable membrane can be suppressed.

As described above, the vehicle rear portion structure relating to the present disclosure can suppress damage to a breathable membrane while ensuring space of the passenger compartment interior.

### BRIEF DESCRIPTION OF THE DRAWINGS

An exemplary embodiment of the present disclosure will be described in detail based on the following figures, wherein:
Fig. 1 is a schematic plan view illustrating a vehicle rear portion structure relating to a present embodiment;
Fig. 2 is a schematic perspective view illustrating a storage battery pack provided at the vehicle rear portion structure relating to the present embodiment;
Fig. 3 is a schematic sectional view in which the vehicle rear portion structure illustrated in Fig. 1 is cut along a vehicle longitudinal direction;
Fig. 4 is a schematic sectional view in which the vehicle rear portion structure illustrated in Fig. 1 is cut along a vehicle transverse direction;
Fig. 5 is a schematic sectional view in which the vehicle rear portion structure illustrated in Fig. 1 is cut along line A-A;
Fig. 6 is a partial, enlarged sectional view illustrating a portion of Fig. 4 in an enlarged manner;
Fig. 7 is an enlarged perspective view of main portions illustrating, in an enlarged manner, main portions of the vehicle rear portion structure relating to the present embodiment; and
Fig. 8 is a schematic sectional view in which the vehicle rear portion structure illustrated in Fig. 1 is cut along line B-B.

### DETAILED DESCRIPTION

A vehicle rear portion structure relating to an embodiment of the present disclosure is described hereinafter by using the drawings. Note that members that are the same or correspond to one another in the drawings are denoted by the same or similar reference numerals, and redundant description is omitted. Further, in cases in which there is a plurality of the same or corresponding members in the drawings, reference numerals may be applied to only some thereof in order to make the drawings easier to understand. Moreover, arrow FR that is marked appropriately in the respective drawings indicates the front side in the vehicle longitudinal direction, and arrow UP indicates the upper side in the vehicle vertical direction. Arrow RH indicates the right side in the vehicle transverse direction, and indicates a vehicle transverse direction outer side in the present embodiment. Hereinafter, when description is given by using merely longitudinal, vertical and left-right directions, they refer to the longitudinal of the vehicle longitudinal direction, the vertical of the vehicle vertical direction, and the left and right of the vehicle left-right direction (vehicle transverse direction), unless otherwise indicated.

### Structure of Vehicle Rear Portion Structure

The structure of a vehicle rear portion structure relating to the present embodiment is described first.

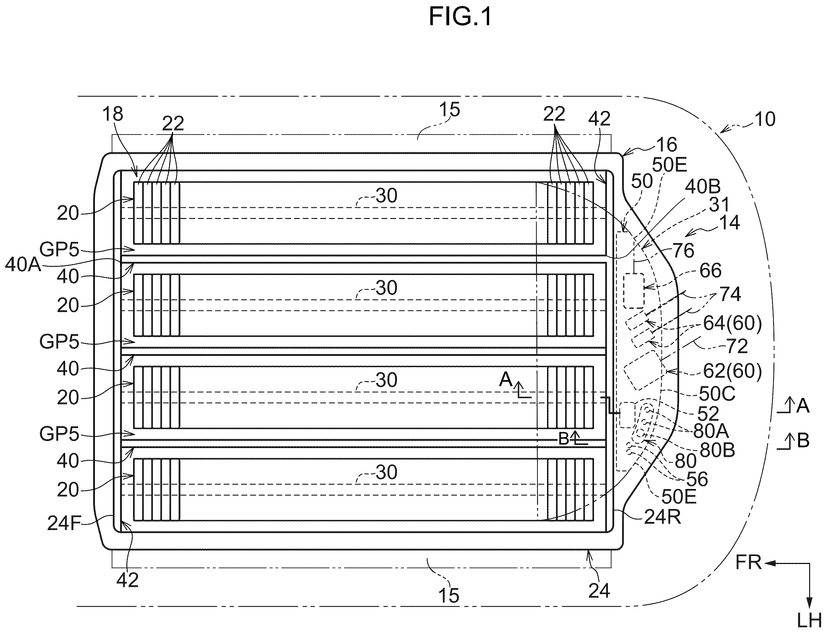

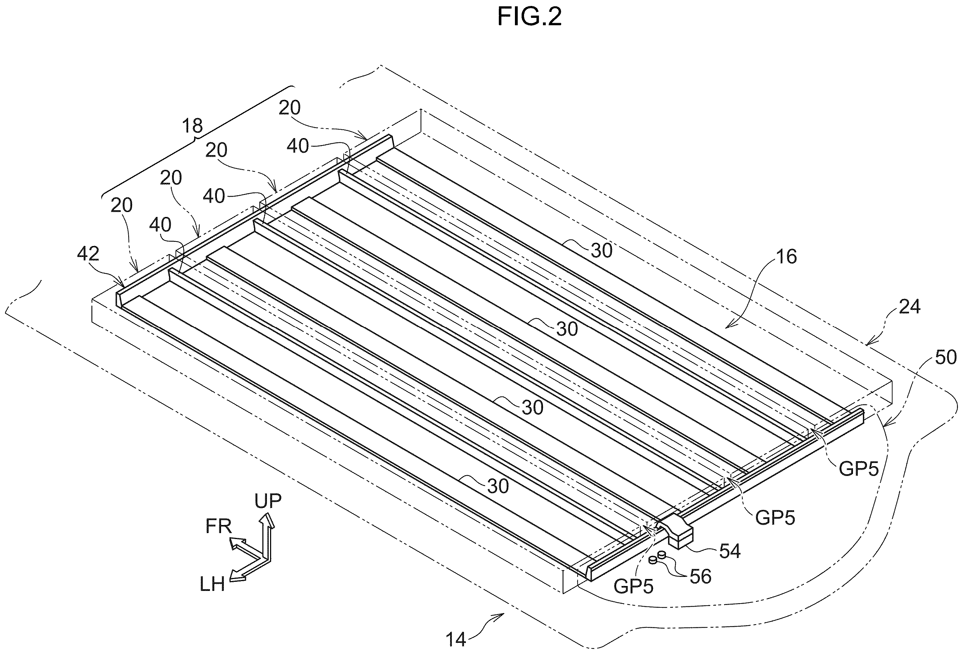

Fig. 1 is a schematic plan view illustrating a portion of a vehicle 10 that has a vehicle rear portion structure 14 of the present embodiment. Fig. 2 is a schematic perspective view illustrating a storage battery pack (battery case) 18 installed in the vehicle 10.

As illustrated in Fig. 1, the storage battery pack 18 installed in the vehicle 10 has plural (four in the present embodiment) storage battery modules (battery modules) 20 as illustrated in Fig. 2 as well, and these storage battery modules 20 are disposed so as to be lined-up in the vehicle transverse direction. Gaps GP5 are formed between the storage battery modules 20 that are adjacent to one another in the vehicle transverse direction. In the present embodiment, because there are four of the storage battery modules 20, there are three of the gaps GP5 that are formed between the storage battery modules 20.

As illustrated in Fig. 1, each of the storage battery modules 20 has plural storage battery cells 22, and the plural storage battery cells 22 are disposed so as to be lined-up in the vehicle longitudinal direction in the storage battery modules 20. Namely, the storage battery pack 18 is a structure in which the plural storage battery modules 20, which have the plural storage battery cells 22 that are disposed so as to be lined-up in the vehicle longitudinal direction, are disposed so as to be lined-up in the vehicle transverse direction.

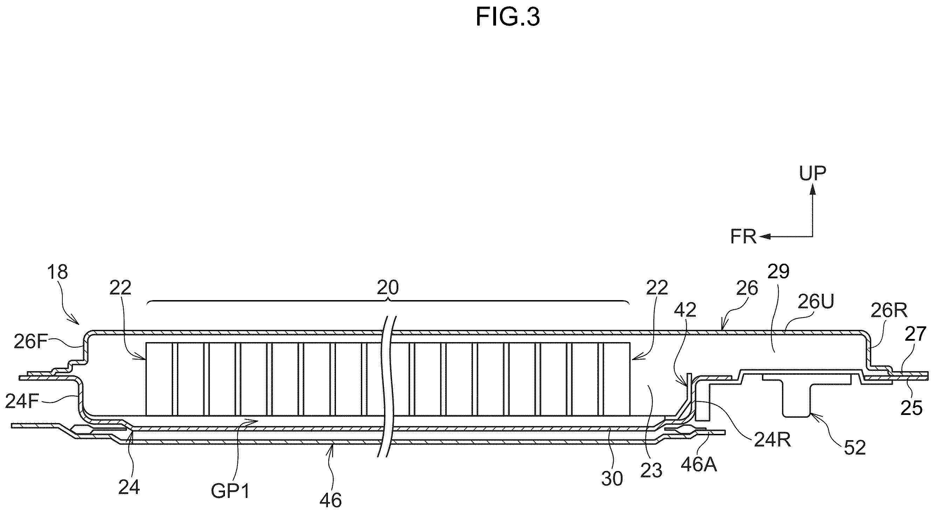

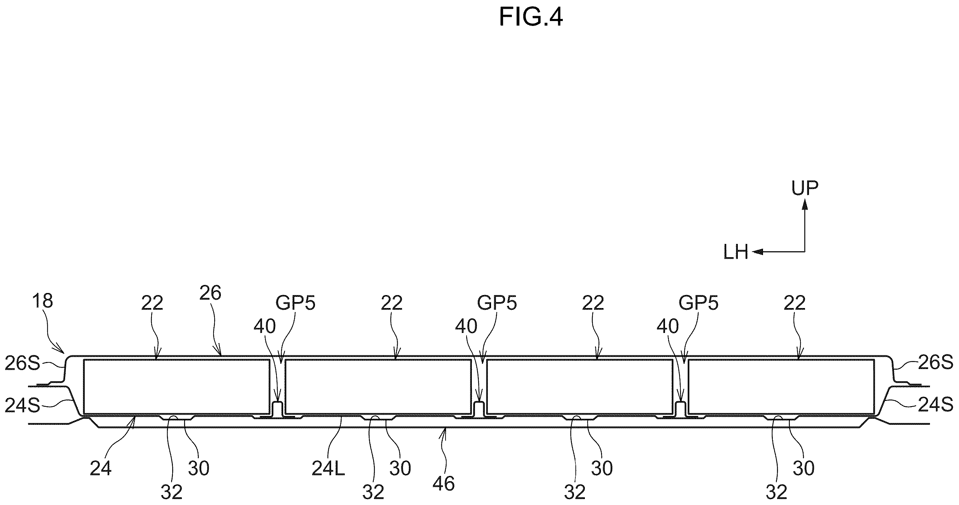

Fig. 3 is a cross-sectional view in which the vehicle rear portion structure 14 illustrated in Fig. 1 is cut along the vehicle longitudinal direction. Fig. 4 is a cross-sectional view in which the vehicle rear portion structure 14 illustrated in Fig. 1 is cut along the vehicle transverse direction. As illustrated in Fig. 3 and Fig. 4, the storage battery pack 18 has a lower case 24 and an upper cover 26. Note that illustration of the upper cover 26 is omitted in Fig. 1 and Fig. 2.

As illustrated in Fig. 3 and Fig. 4, the lower case 24 is a member at which is provided a box-shaped accommodating portion 23 that can accommodate the storage battery modules 20. The lower case 24 is structured to include a lower plate 24L, a front plate 24F, a rear plate 24R and a pair of left and right side plates 24S. The lower plate 24L is a plate-shaped region that supports the storage battery modules 20 from the lower side. The front plate 24F and the rear plate 24R are plate-shaped regions that stand erect from the front end portion and the rear end portion of the lower plate 24L, respectively. The side plates 24S are plate-shaped regions that stand erect from the vehicle transverse direction both sides of the lower plate 24L. The upper surface of the lower case 24 is open, and a flange portion 25 juts-out from the peripheral edge of the lower case 24 toward the outer side of the accommodating portion 23.

Note that a shear panel 46 (a panel member), which extends in the vehicle longitudinal direction and the vehicle transverse direction, is provided at the lower side of the storage battery pack 18. The shear panel 46 is formed by a metal plate such as an aluminum alloy plate or a steel plate, and is connected respectively to a pair of rockers 15 (see Fig. 1) that are some of the vehicle frame members and that respectively extend in the vehicle longitudinal direction at further toward the vehicle transverse direction both outer sides than the storage battery pack 18. Due thereto, the lower surface of the storage battery pack 18 is covered by the shear panel 46, and the storage battery modules 20 are protected by the shear panel 46 from foreign objects from the road and the like.

On the other hand, the upper cover 26 is a lid-shaped member that closes the upper surface of the lower case 24, and is formed to include the accommodating portion 23 that is structured by the upper cover 26 together with the lower case 24. The upper cover 26 is structured similarly to the lower case 24, and is structured to include an upper plate 26U, a front plate 26F, a rear plate 26R and a pair of left and right side plates 26S. Note that the upper plate 26U is a plate-shaped region that covers the storage battery modules 20 from the upper side.

The bottom surface of the upper cover 26 is open, and a flange portion 27 juts-out from the peripheral edge of the upper cover 26 toward the outer side of the accommodating portion 23. The flange portion 27 can be joined with the flange portion 25 formed at the lower case 24, in a state in which the flange portion 27 and the flange portion 25 are brought together. The storage battery pack 18 is structured by the lower case 24 and the upper cover 26.

Here, at the rear end portion of the lower case 24, the rear plate 24R is disposed further toward the front side than the rear plate 26R of the upper cover 26, and the surface area of the flange portion 25 is greater than the surface area of the flange portion 27 of the upper cover 26. A space 29 that communicates with the accommodating portion 23 is provided between the rear end portion of the upper plate 26U of the upper cover 26 and the flange portion 25 of the lower case 24.

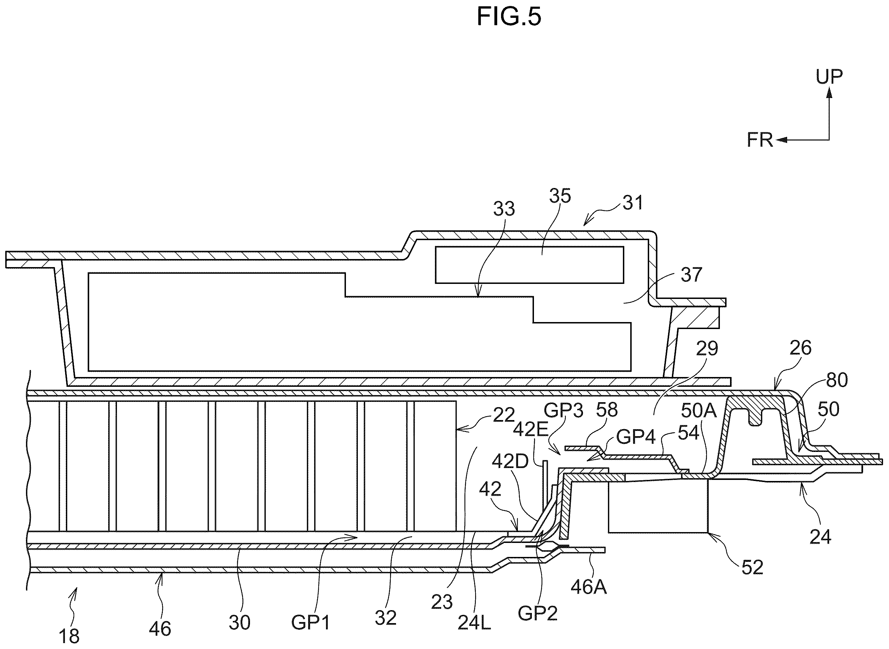

Fig. 5 is a schematic sectional view cut along line A-A of Fig. 1. Note that, although an equipment case 31 is illustrated by a virtual line in Fig. 1, the equipment case 31 is illustrated by a solid line in Fig. 5 in order to make the drawing easier to understand.

As illustrated in Fig. 5, the equipment case 31 is disposed above the rear end portion of the upper cover 26. A junction box 33 (control device) that houses a relay and auxiliary equipment, and an ECU (control device) 35, and the like are disposed within the equipment case 31. The relay and the auxiliary equipment are connected to the storage battery modules 20 by a wiring tube (routed member) 88 such as a wire harness that is described later, and are electrically connected to the storage battery modules 20.

An unillustrated opening portion is formed in the rear end portion of the upper cover 26. An interior space 37 of the equipment case 31 illustrated in Fig. 5, and the space 29 and the accommodating portion 23 of the storage battery pack 18, communicate through this opening portion.

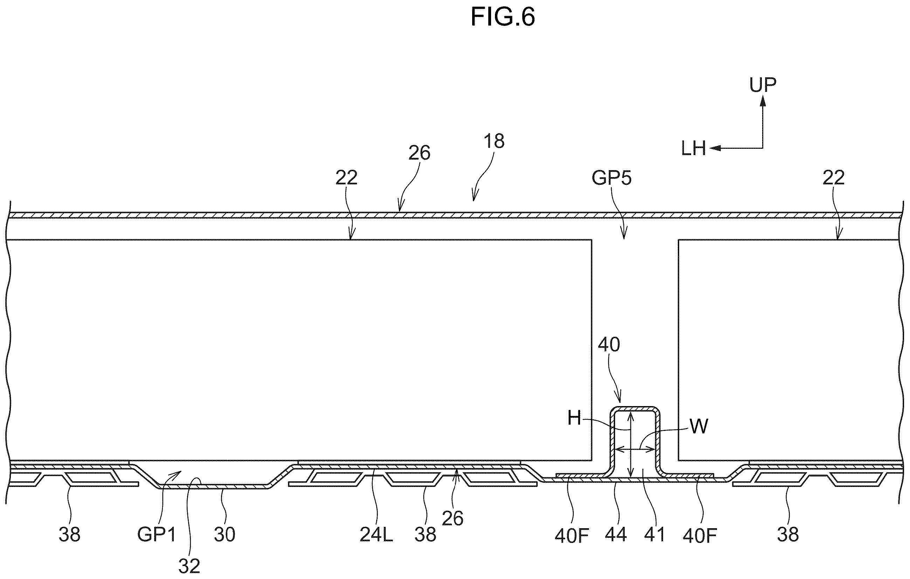

By the way, Fig. 6 is a partial, enlarged sectional view illustrating a portion of Fig. 4 in an enlarged manner. As illustrated in Fig. 4 and Fig. 6, plural (the same number as the number of the storage battery modules 20) downwardly convex portions 30 are formed at the lower plate 24L of the lower case 24. The downwardly convex portions 30 project out downwardly at the vehicle transverse direction central positions of the storage battery modules 20, respectively. Namely, at the downwardly convex portions 30, the lower case 24 is spaced apart from the lower surfaces of the storage battery cells 22, and gaps GP1 are formed.

The downwardly convex portions 30 are formed so as to extend in the vehicle longitudinal direction, i.e., the direction in which the storage battery cells 22 are lined-up, at the respective storage battery modules 20. The lengths in the vehicle longitudinal direction of the downwardly convex portions 30 are formed to be longer than the lengths in the vehicle longitudinal direction of the storage battery modules 20. The downwardly convex portions 30 extend in the vehicle longitudinal direction continuously from a vicinity of the front plate 24F illustrated in Fig. 3 to a vicinity of the rear plate 24R.

In this way, due to the gaps GP1 that are spaced apart from the lower surfaces of the storage battery cells 22 extending in the vehicle longitudinal direction due to the downwardly convex portions 30, the gaps GP1 structure portions of a smoke exhausting flow path 32. If, for some reason, gas that contains smoke (hereinafter this gas is simply called "smoke") is generated at the storage battery cell 22, the smoke is exhausted from the vehicle transverse direction central position of the lower surface of the storage battery cell 22. Accordingly, smoke generated at the storage battery cell 22 flows into the gap GP1 structured by the downwardly convex portion 30. As will be described later, the smoke exhausting flow path 32 is provided continuously from the gaps GP1 to GP4, and generated smoke is efficiently guided to a smoke exhausting valve 52.

Note that coolers 38 are provided along the vehicle longitudinal direction respectively at both vehicle transverse direction sides of the downwardly convex portions 30 at the lower plate 24L of the lower case 24. The coolers 38 structure coolant flow paths that extend in the vehicle longitudinal direction. Due to heat of the coolers 38 being transferred to the coolant flowing through the coolant flow paths, the storage battery cells 22 are cooled, and overheating of the storage battery cells 22 can be suppressed.

On the other hand, as illustrated in Fig. 1, a reinforcing member 40 is disposed at the lower plate 24L of the lower case 24, at each of the gaps GP5 that are between the storage battery modules 20. Cell seats 44 are formed at the positions at which the reinforcing members 40 are provided. The cell seats 44 are formed in downwardly convex shapes at the positions where the reinforcing members 40 are disposed at the lower plate 24L of the lower case 24.

As illustrated in Fig. 6, the cross-sectional shape, which is cut along the vehicle transverse direction, of the reinforcing member 40 is a substantially hat-shaped cross-sectional shape whose lower side is open. A flange plate 40F of the reinforcing member 40 is joined to the cell seat 44. Due thereto, the open portion at the lower side of the reinforcing member 40 is closed-off, and a closed cross-sectional portion 41 is formed at the reinforcing member 40. Note that height dimension H of the reinforcing member 40 is larger than width dimension W thereof.

Here, the width dimension W is set in advance because the reinforcing member 40 is formed within the gap GP5 that is provided between the storage battery modules 20 that are adjacent to one another in the vehicle transverse direction. By setting the height dimensions H of the reinforcing members 40 to be larger than the width dimensions W thereof, as compared with a case in which the height dimensions H are set to be the same sizes as the width dimensions W, the second moment of area is improved and deformation can be suppressed at the reinforcing members 40.

As illustrated in Fig. 1, the reinforcing members 40 have lengths such that they reach a vicinity of the front plate 24F of the lower case 24 and a vicinity of the rear plate 24R of the lower case 24. Front ends 40A and rear ends 40B of the reinforcing members 40 are joined to the front plate 24F and the rear plate 24R of the lower case 24 by joining members 42, respectively. The reinforcing members 40 thereby reinforce the storage battery pack 18.

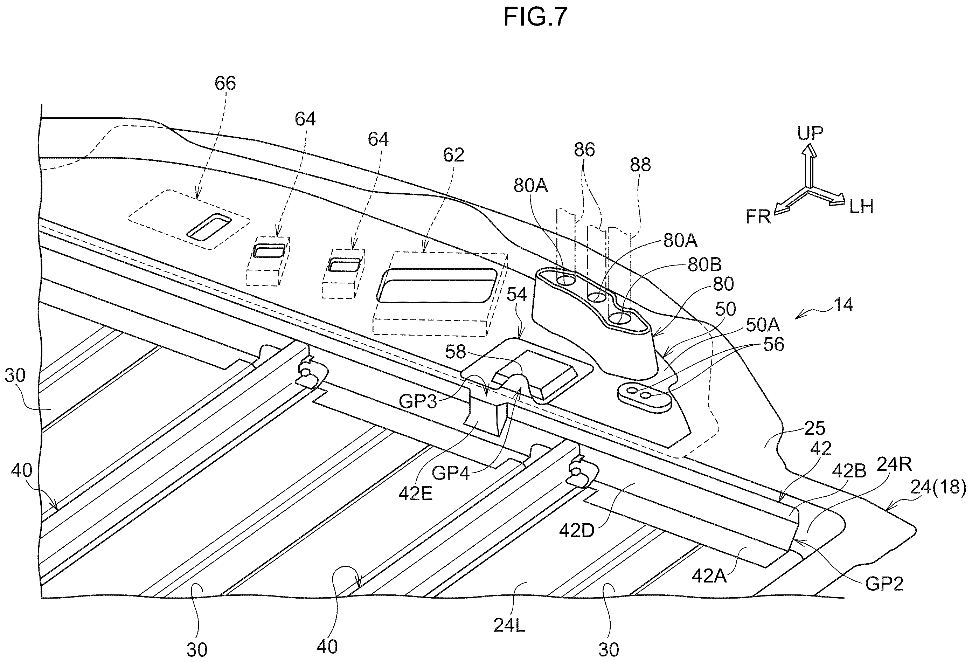

A perspective view of the rear plate 24R side of the lower case 24 is shown in Fig. 7. As illustrated in Fig. 7, the joining member 42 has a first separate portion 42D, which is spaced apart from the rear plate 24R of the lower case 24, between joined surface 42A that planarly contacts the lower plate 24L of the lower case 24 and joined surface 42B that planarly contacts the rear plate 24R of the lower case 24. The first separate portion 42D is formed at an incline as seen in a cross-section in the vehicle longitudinal direction, and a gap GP2 is formed between the first separate portion 42D and the rear plate 24R of the lower case 24. This gap GP2 is continuous in the vehicle transverse direction, and communicates with the gaps GP1 that are between the downwardly convex portions 30 and the lower surfaces of the storage battery cells 22. Namely, this gap GP2 structures a portion of the smoke exhausting flow path 32.

Here, the front ends 40A and the rear ends 40B of the reinforcing members 40 illustrated in Fig. 1 are open, and communicate with the gaps GP2 illustrated in Fig. 7. Namely, the closed cross-sectional portions 41 structured by the reinforcing members 40 and the cell seats 44 communicate with the gaps GP2 illustrated in Fig. 7, and structure portions of the smoke exhausting flow path 32.

By the way, as illustrated in Fig. 7, a connector block 50 is provided at the flange portion 25 that is provided at the rear end portion of the lower case 24. For example, a first connector 62 made of metal, second connectors 64 made of resin and a third connector 66 made of metal are disposed at the lower surface side of the connector block 50, including a region at the vehicle transverse direction central side. A first wire 72 is connected to the first connector 62, and second wires 74 are connected to the second connectors 64. Further, a third wire 76 is connected to the third connector 66. As an example, the first wire 72 and the third wire 76 are wires through which flows current of a higher voltage than at the second wires 74.

As illustrated in Fig. 1, the front side of the connector block 50 (the side at the vehicle front side) is rectilinear along the vehicle transverse direction. In contrast, the rear side of the connector block 50 (the side at the vehicle rear side) is curved such that the vehicle transverse direction center thereof is convex toward the vehicle rear side. Namely, central portion 50C in the vehicle transverse direction of the connector block 50 is formed to be longer in the vehicle longitudinal direction than both vehicle transverse direction end portions 50E.

Further, as illustrated in Fig. 1, Fig. 5 and Fig. 7, the smoke exhausting valve 52 is provided at the vehicle transverse direction outer side at the connector block 50. A cover plate 54, which structures a portion of the smoke exhausting flow path 32 between the cover plate 54 and the connector block 50, is mounted to the connector block 50 from the storage battery pack 18 to the smoke exhausting valve 52.

An upwardly convex portion 58 is formed at the cover plate 54. At the side thereof that is at the vehicle front side, the upwardly convex portion 58 is shaped such that the vehicle transverse direction central portion thereof is curved convexly upward. Due to the upwardly convex portion 58 being formed at the cover plate 54, the gap GP4 is structured between the cover plate 54 and the connector block 50. Smoke can move in the vehicle longitudinal direction through this gap GP4, and the gap GP4 structures a portion of the smoke exhausting flow path 32.

Further, a second separate portion 42E is provided at the joining member 42 that is joined to the rear plate 24R of the lower case 24. The second separate portion 42E is formed at a position corresponding to the upwardly convex portion 58 in the vehicle transverse direction. The second separate portion 42E is spaced apart from the rear plate 24R of the lower case 24, and is continuous with the first separate portion 42D. Gap GP3 is structured between the second separate portion 42E and the rear plate 24R of the lower case 24.

Accordingly, the smoke exhausting flow path 32 within the storage battery pack 18 is formed so as to be continuous from the gaps GP1 between the lower surfaces of the storage battery cells 22 and the downwardly convex portions 30, through the gap GP2 between the second separate portion 42E and the rear plate 24R of the lower case 24, and through the gap GP3 between the second separate portion 42E and the rear plate 24R of the lower case 24, and through the gap GP4 between the cover plate 54 and the lower case 24, all the way to the smoke exhausting valve 52.

The smoke exhausting valve 52 is configured to open when the internal pressure of the smoke exhausting flow path 32 becomes higher than the air pressure at the exterior of the smoke exhausting flow path 32 by a predetermined value or more. Namely, when smoke flows into the smoke exhausting flow path 32 and the internal pressure increases by a predetermined value or more, the smoke exhausting valve 52 opens, and gas within the smoke exhausting flow path 32 is exhausted to the exterior.

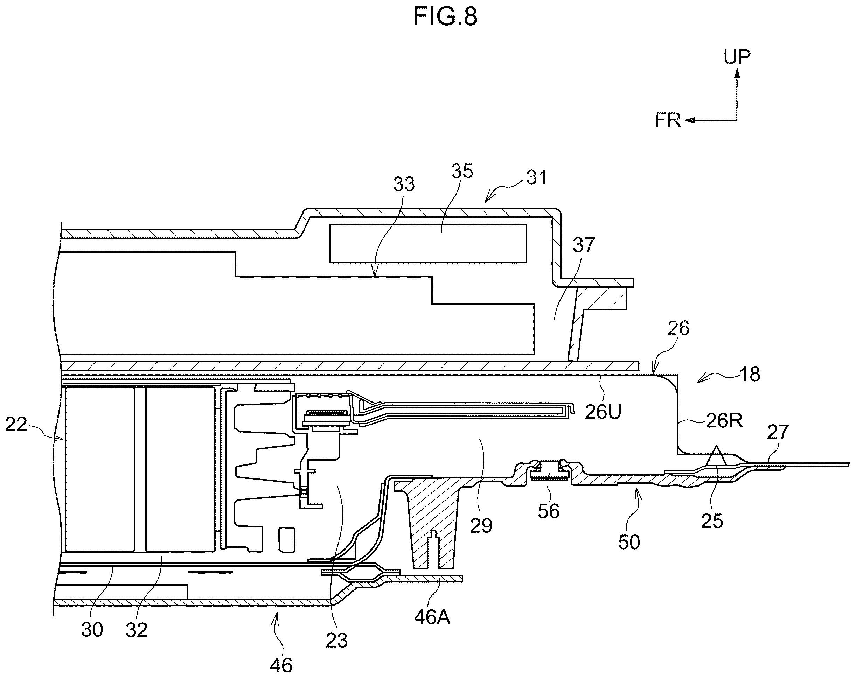

Moreover, in the present embodiment, as illustrated in Fig. 7, breathable membranes 56 are mounted to the connector block 50. Fig. 8 is a schematic sectional view cut along line B-B of Fig. 1. As illustrated in Fig. 8, the breathable membranes 56 can communicate with the space 29 that is provided between the upper plate 26U of the upper cover 26 and the flange portion 25 of the lower case 24. Note that this space 29 communicates with the accommodating portion 23 in which the storage battery modules 20 are accommodated.

Namely, the breathable membranes 56 are provided so as to be able to communicate the interior of the storage battery pack 18 and the vehicle exterior, and can adjust the pressure of the interior of the storage battery pack 18. More specifically, when the pressure of the interior of the storage battery pack 18 rises, air can be exhausted from the interior of the storage battery pack 18 through the breathable membranes 56 to the exterior. When the pressure of the interior of the storage battery pack 18 drops, air can be made to flow-in through the breathable membranes 56 from the exterior to the interior of the storage battery pack 18.

Here, as described above, the shear panel 46 that extends in the vehicle longitudinal direction and the vehicle transverse direction is provided at the lower side of the storage battery pack 18. In the present embodiment, an extending portion 46A juts-out toward the vehicle rear side from the rear end of the shear panel 46. Note that this extending portion 46A extends out toward a direction of overlapping with the breathable membranes 56 as seen in a plan view of the vehicle.

Further, in the present embodiment, gasses pass through the breathable membranes 56, but the passage of liquid (including vapor) is impeded at the breathable membranes 56. Gore-Tex^{™} for example is used as the material thereof. Further, the breathable membranes 56 are formed such that, even if gas passes therethrough, due to the breathable membranes 56 applying resistance to the movement of the gas, the gas does not move all at once in a short period of time.

Moreover, as illustrated in Fig. 7, in the present embodiment, the plural (two) breathable membranes 56 are provided, and these breathable membranes 56 are disposed along the vehicle transverse direction. Further, the breathable membranes 56 are provided further toward the vehicle transverse direction outer side and the vehicle vertical direction upper side than the smoke exhausting valve 52.

On the other hand, a routing block 80 stands erect at the connector block 50, further toward the vehicle rear side than the smoke exhausting valve 52 and the breathable membranes 56. The routing block 80 is formed so as to project out from upper surface 50A of the connector block 50, further toward the upper side than the smoke exhausting valve 52 and the breathable membranes 56. Further, as seen from the vehicle upper side, the routing block 80 is shaped so as be longer in the vehicle transverse direction than in the vehicle longitudinal direction, and is provided at the outer edge side of the connector block 50.

Further, as seen from the vehicle outer side, the routing block is formed in a substantially truncated cone shape, and the cross-sectional shape thereof that is cut along the horizontal direction becomes larger on progression toward the vehicle lower side. First insert-through holes 80A and a second insert-through hole 80B that are circular and pass through the connector block 50 in the vertical direction are formed at the inner side of the routing block 80. In the present embodiment, for example, circulating pipes 86, which circulate cooling water to onboard devices of the vehicle, are inserted through the first insert-through holes 80A. The wiring tube 88, in which are accommodated plural wires that transmit electrical signals to onboard devices, is inserted through the second insert-through hole 80B.

### Operation and Effects of Vehicle Rear Portion Structure

Operation and effects of the vehicle rear portion structure relating to the present embodiment are described next.

In the vehicle 10 to which is applied the vehicle rear portion structure 14 of the present embodiment that is illustrated in Fig. 1, the storage battery modules 20 are structured by the plural storage battery cells 22. The storage battery cells 22 are disposed so as to be lined-up in the vehicle longitudinal direction at the storage battery modules 20, and further, the storage battery modules 20 are disposed so as to be lined-up in the vehicle transverse direction.

Due thereto, the plural storage battery cells 22 can be arranged efficiently in the vehicle longitudinal direction and the vehicle transverse direction. In particular, because the direction in which the storage battery cells 22 are arrayed at the storage battery modules 20 is the vehicle longitudinal direction, the number of storage battery cells 22 per one row can be made to be larger as compared with a structure in which the storage battery cells 22 are arrayed in the vehicle transverse direction.

In a usual state, smoke is not generated at the storage battery cells 22 illustrated in Fig. 5. However, if, due to some circumstance, smoke is generated, the smoke is exhausted from the vehicle transverse direction central position of the lower surface of the storage battery cell 22. This smoke flows-out into the gap GP1 provided between the downwardly convex portion 30 of the lower case 24 of the storage battery pack 18 and the lower surface of the storage battery cell 22. Further, this smoke passes through the gap GP2 and the gap GP3 that are respectively provided at the rear plate 24R side of the lower case 24, and through the gap GP4 provided between the cover plate 54 and the connector block 50 that are respectively provided at the rear end portion of the lower case 24, and flows all the way to the smoke exhausting valve 52. The gaps GP1 through the gap GP4 respectively structure portions of the smoke exhausting flow path 32. When the pressure of the interior of the smoke exhausting flow path 32 becomes higher than pressure at the exterior, the smoke is exhausted from the smoke exhausting valve 52.

Here, in the present embodiment, the vehicle rear portion structure 14 has the shear panel 46 and the breathable membranes 56. The shear panel 46 extends in the vehicle longitudinal direction and the vehicle transverse direction, and is connected to the pair of rockers 15 (see Fig. 1) that respectively extend in the vehicle longitudinal direction at further toward the vehicle transverse direction both outer sides than the storage battery pack 18, and covers the vehicle lower side of the storage battery pack 18. Due to the storage battery pack 18 being covered by the shear panel 46 from the vehicle lower side in this way, the storage battery pack 18 is protected from foreign matter from the road due to the vehicle traveling.

Further, in the present embodiment, the breathable membranes 56 permit movement of gasses with respect to the smoke exhausting flow path 32, and impede movement of liquids. For example, in a case in which the vehicle 10 moves to a place with a different external air pressure (e.g., a place at a high altitude), the pressure difference between the internal pressure of the smoke exhausting flow path 32 and the external air pressure becomes larger. In this case, the pressure difference can be mitigated due to air passing through the breathable membranes 56.

In the present embodiment, the breathable membranes 56 are provided at the vehicle longitudinal direction rear end portion side of the lower case 24 that structures the lower portion of the storage battery pack 18. Therefore, the space within the passenger compartment can be ensured as compared with a case in which the breathable membranes 56 are provided at the upper cover 26 side.

Further, the breathable membranes 56 are disposed further toward the vehicle upper side than the shear panel 46, and are provided so as to be able to communicate the interior of the storage battery pack 18 and the vehicle exterior, and can adjust the pressure of the interior of the storage battery pack 18. Moreover, in the present embodiment, the extending portion 46A juts-out toward the vehicle rear side from the rear end of the shear panel 46, and this extending portion 46A extends out toward a direction of overlapping the breathable membranes 56 as seen in a plan view of the vehicle.

In the present embodiment, because the breathable membranes 56 are provided at the lower case 24 side, the breathable membranes 56 are in a state of being exposed at the vehicle outer side. Therefore, due to the extending portion 46A jutting out toward the vehicle rear side from the rear end of the shear panel 46, and the extending portion 46A extending out toward a direction of overlapping the breathable membranes 56 as seen in a plan view of the vehicle, damage to the breathable membranes 56 due to flying stones and the like can be suppressed.

Namely, in the present embodiment, damage to the breathable membranes 56 can be suppressed, while the space within the passenger compartment is ensured.

Further, in the present embodiment, two of the breathable membranes 56 are provided as illustrated in Fig. 1 and Fig. 7. Due thereto, even if one of the breathable membranes 56 is damaged, adjustment of the pressure of the interior of the storage battery pack 18 is possible owing to the other breathable membrane 56.

Moreover, in the present embodiment, the breathable membranes 56 are structured by a material that has both a waterproof property and gas permeability, such as Gore-Tex^{™} for example. Due thereto, in the present embodiment, even though the breathable membranes 56 are exposed at the vehicle exterior, moisture entering into the storage battery pack 18 can be suppressed.

Still further, in the present embodiment, the smoke exhausting valve 52 that can exhaust smoke that is within the storage battery pack 18 is disposed at the vehicle rear side of the storage battery pack 18, and the breathable membranes 56 are provided further toward the vehicle transverse direction outer side and the vehicle vertical direction upper side than the smoke exhausting valve 52. Due thereto, in the present embodiment, it is possible to suppress gas, which is exhausted from the smoke exhausting valve 52, flowing in towards the breathable membranes 56.

In the present embodiment, the breathable membranes 56 are held at the connector block 50. Namely, the breathable membranes 56 can be mounted to the vehicle 10 by using the connector block 50. In a case in which external force is applied to the vehicle 10, some of the energy of that external force is absorbed by the connector block 50, and therefore, damage to the breathable membranes 56 can be suppressed.

Further, in the present embodiment, the smoke exhausting valve 52 also is held at the connector block 50. Namely, the smoke exhausting valve 52 can be mounted to the vehicle 10 by using the connector block 50. Because some of the energy of external force that is applied to the vehicle 10 is absorbed by the connector block 50, the smoke exhausting valve 52 can be protected. Further, due to the breathable membranes 56 and the smoke exhausting valve 52 being held at the connector block 50 in this way, the relative positions of the breathable membranes 56 and the smoke exhausting valve 52 can be maintained stably.

Moreover, in the present embodiment, the routing block 80 stands erect at the connector block 50, at further toward the vehicle rear side than the smoke exhausting valve 52 and the breathable membranes 56. The routing block 80 is formed so as to project out further toward the upper side than the smoke exhausting valve 52 and the breathable membranes 56, from the upper surface 50A of the connector block 50. Further, as seen from the vehicle outer side, the routing block 80 is formed in a substantially truncated cone shape. The cross-sectional shape of the routing block 80 that is cut along the horizontal direction becomes larger on progression toward the upper surface 50A side of the connector block 50. Namely, the sectional surface area of the routing block 80 increases and the rigidity thereof improves, toward the upper surface 50A side of the connector block 50.

In this way, in the present embodiment, the routing block 80 stands erect at further toward the vehicle rear side than the smoke exhausting valve 52 and the breathable membranes 56, and so as to project-out further than the smoke exhausting valve 52 and the breathable membranes 56. Due thereto, in the present embodiment, at the time of a rear collision of the vehicle, the smoke exhausting valve 52 and the breathable membranes 56 can be protected by the routing block 80. Note that the first insert-through holes 80A and the second insert-through hole 80B are formed in the routing block 80, and the circulating pipes 86 and the wiring tube 88 can be inserted therethrough respectively. However, it is not absolutely necessary to form the first insert-through holes 80A and the second insert-through hole 80B. There may merely be a wall portion that protects the smoke exhausting valve 52 and the breathable membranes 56.

Although an embodiment of the present disclosure has been described above, the present disclosure is not limited to this embodiment. The embodiment and various modified examples may be used by being combined appropriately, and the present disclosure can, of course, be implemented in various forms within a scope that does not depart from the gist thereof.

## Claims

1. A vehicle rear portion structure (14), comprising:
a panel member (46) that extends in a vehicle longitudinal direction and a vehicle transverse direction, that is connected to a pair of rockers (15) respectively extending in the vehicle longitudinal direction at further toward vehicle transverse direction outer sides than a battery case (18), and that covers a vehicle lower side of the battery case (18); and
a breathable membrane (56) that is provided at a vehicle longitudinal direction rear end portion side of a lower case (24) that configures a lower portion of the battery case (18), that is disposed further toward a vehicle upper side than the panel member (46), that is configured to communicate an interior of the battery case (18) and a vehicle exterior, and that adjusts pressure of the interior of the battery case (18),
wherein an extending portion (46A), which juts-out toward a vehicle rear side from a rear end of the panel member (46) and extends out toward a direction of overlapping with the breathable membrane (56) as seen in a plan view of a vehicle, is provided.

2. The vehicle rear portion structure of claim 1, wherein a plurality of breathable membranes (56) are provided.

3. The vehicle rear portion structure of claim 1, wherein the breathable membrane (56) is formed of a material that has both a waterproof property and gas permeability.

4. The vehicle rear portion structure of claim 1, wherein a smoke exhausting valve (52), which is configured to exhaust smoke that is within the battery case (18), is disposed at a vehicle rear side of the battery case (18), and the breathable membrane (56) is provided further toward a vehicle transverse direction outer side and a vehicle vertical direction upper side than the smoke exhausting valve (52).

5. The vehicle rear portion structure of claim 1, further comprising a connector block (50) provided at a flange portion (25) that is provided at the vehicle longitudinal direction rear end portion side of the lower case (24),
wherein the breathable membrane (56) is mounted to the connector block (50).
